# EUROPEAN PATENT APPLICATION

(11) **EP 2 957 406 A1**
(43) Date of publication of application: **23.12.2015**
(21) Application number: 14172522.6
(22) Date of filing: 16.06.2014
(51) Int. Cl.: B29B 17/00, C08J 11/12

(54) **Method of manufacturing rubber reclaim**

(71) Applicant: Earls, Michael, Athenry, County Galway (IE)
(72) Inventor: Earls, Michael, Athenry, County Galway (IE)
(74) Representative: Brophy, David Timothy

(57) **Abstract**

The present invention provides a method for producing rubber reclaim, said method comprising: (i) heating a rubber crumb to about 150 to 200°C; and (ii) mixing the rubber crumb at about 150 to 200°C to produce rubber reclaim.

## Description

### Field of the Invention

This invention relates to a method of manufacturing rubber reclaim from recycled rubber material such as rubber tyre chips.

### Background of the Invention

Various methods are used commercially for the production of reclaimed rubber from waste tyre and other rubber products. Most of the methods adopt thermo-chemical, thermo-mechanical, or mechano-chemical processes. In most cases, toxic chemicals are used as the reclaiming agent. In a planetary extruder, the reclaiming process can be initiated without a reclaiming agent. However, in practice, it has been observed that the reclaiming is incomplete and the properties of the reclaimed rubber are inferior compared to rubber produced according to conventional methods using toxic reclaiming agents. Reclamation can occur by breaking existing crosslinks in the vulcanized rubber (scission of the crosslink) or by promoting scission of the main chain of the polymer, or by a combination of both processes. Oxidative scission at sulfur crosslinks can also occur. It has been reported that an alkyl phenol sulfide reclaiming agent had little activity in the absence of oxygen. However, in the presence of oxygen, the reclaiming agent showed exceptional activity in attacking a sulphur-cured rubber vulcanizate to produce low molecular weight fragments under relatively mild experimental conditions. Thus, the present inventors postulated that the reclaiming process may be expected to involve main chain breakdown as well as crosslink breakdown.

The present inventors have devised an innovative process to manufacture rubber reclaim which is simple, less labour intensive, and can be easily controlled. This method requires far lower capital outlay to start manufacturing, typically being about a quarter of what is required using certain conventional methods and machinery. The process can easily be adopted for reclaiming of products made from rubber various sources, for example, recycled rubber tyre chips. Tests carried out by the inventors on the reclaimed rubber produced by the innovative method described herein has shown that the properties of the reclaimed rubber is far superior compared to the material available on the market (produced by thermo-chemical, thermo-mechanical and mechano-chemical methods). For example, superfine reclaim manufactured using a thermo-chemical process has a tensile strength of 4.5 N/mm², in contrast to the reclaim produced by the thermo-mechanical method described herein which has yielded results in the range of 6.5 N/mm² to 7.5 N/mm². Additional relevant properties of reclaimed rubber tested by the inventors include its Mooney Viscosity and other mechanical properties.

### Summary of the Invention

Accordingly, the present invention provides a method for producing rubber reclaim, said method comprising:
(i) heating a rubber crumb to about 150 to 200°C; and
(ii) mixing the rubber crumb at about 150 to 200°C to produce the rubber reclaim.

By processing the rubber crumb according to heating step (i), the crumb attains the required softness for further processing in mixing step (ii). If the temperature is greater than the recited level, degradation of the polymer in the crumb occurs, while if the temperature is less than the recited level, the crumb does not attain the required softness.

By processing the rubber crumb according to mixing step (ii), oxidative degradation of the rubber crumb is avoided and the produced rubber reclaim is appropriately soft and easily processed to various forms. However, if mixed at a temperature below 150°C, not enough molecular chains are broken down to achieve the optimal Mooney Viscosity of between 70-90. Above 200°C, degradation of the polymer in the crumb begins to occur thus causing the tensile strength and elasticity of the rubber reclaim to decrease.

Mooney Viscosity refers to the measurement method defined in International Standards Organisation Standard ISO 289, Part 1. Mooney Viscosity is determined using a Mooney viscometer instrument at a prescribed elevated temperature. It is defined in terms of the torque imposed by a rubber disk, trapped between two heated dies, upon a rotating spindle embedded within the disk. It is expressed in Mooney Units and typically quoted in the form e.g. 50ML(1+4)100°C, where "50M" is the viscosity in Mooney Units; "L" denotes that the large rotor was used (as opposed to "S" for small); 1 is the preheat time in minutes; 4 is the time in minutes after starting the motor at which the reading was taken; and 100°C is the test temperature.

The skilled person will readily appreciate that the optimum temperatures in steps (i) and (ii) will depend on the specific rubber or mix of rubbers in the crumb. Thus, for a given crumb whose predominant constituent is natural rubber, the heating step (i) and the mixing step (ii) will tend to be carried out at lower temperatures than for synthetic rubbers.

Preferably the heating step (i) comprises heating the rubber crumb particles at a sufficiently high temperature and for a sufficiently long time to achieve a core particle temperature of at least 160°C, and preferably at least 170°C.

Further preferably, the heating step (i) comprises heating the rubber crumb particles to a maximum temperature below that at which oxidative degradation of the rubber polymer occurs.

Suitably, the heating step (i) comprises heating the rubber crumb to about 165 to 185°C, optionally about 170 to 175°C.

Optionally, the heating step (i) comprises heating the rubber crumb for at least 3 minutes, more preferably for about 3.5 to 4.5 minutes. In preferred embodiments, the heating step (i) comprises heating the rubber crumb to 165 to 185°C, optionally 170 to 175°C, for at least 3 minutes. A particularly preferred embodiment involves heating the rubber crumb to about 175°C for about 4 minutes. The upper time limit is determined by two considerations: (i) it is preferred to minimise energy usage and thus an optimal process will bring the core temperature of the particles up to a sufficiently high level, with any further heating being potentially wasteful; and (ii) if the heating is achieved by subjecting the particles to a higher external temperature than the degradation temperature point of the rubber, then one will want the crumb to travel along a thermal heating curve sufficiently far to ensure appropriate softening, but to avoid heating beyond that point in time when degradation would occur.

The heating step (i) may comprise heating the rubber crumb in a heated conveyor tunnel. Optionally, the heating step (i) comprises heating the rubber crumb in a heated conveyor tunnel wherein the depth of the crumb on the conveyor is not more that 20 mm, optionally not more than 15 mm, preferably about 10 mm. This helps ensure a more even heating of the crumb.

The mixing step (ii) preferably continues at a temperature and time sufficient to achieve the optimal Mooney Viscosity of between 70-90 Mooney Units, and again without allowing the rubber to exceed the temperature at which oxidative degradation of the polymer occurs.

Optionally, the mixing step (ii) comprises heating the rubber crumb to about 160 to 180°C, more preferably about 165 to 170°C. Optionally, the mixing step (ii) comprises heating the rubber crumb for at least 3 minutes. In preferred embodiments, the mixing step (ii) comprises heating the rubber crumb for about 3.5 to 4.5 minutes. For a presently preferred embodiment, the mixing step (ii) comprises mixing the rubber crumb at about 170°C for about 4 minutes. Optionally, the mixing step (i) comprises mixing the rubber crumb in an internal mixer, which can suitably be an internal batch mixer. Optionally, said internal mixer is of the type known as a Banbury™ mixer (whether made by Banbury or by another manufacturer). By "mixing" it is intended to mean that the rubber crumb is subjected to mechanical mixing and/or shearing, and from which mixing the rubber reclaim is produced.

Optionally, the method comprises a pre-heating step before the heating step (i). Suitably, said preheating step comprises heating the rubber crumb to about 75°C. Preferably, said preheating step comprises heating the rubber crumb to about 75°C and maintaining the crumb at about 75°C until the crumb undergoes the heating step (i). Preferably, said preheating step takes place in a first hopper which is preferably an insulated and/or heated hopper.

The method may comprise a holding step prior to the mixing step (ii). This is particularly preferred if a conveyor or continuous heating system is used for step (i) and a batch mixer is used for step (ii).

Optionally, the holding step comprises holding the rubber crumb in a second hopper prior to the mixing step (ii) and preferably, the second hopper is configured to retain most, or substantially all, of the heat in the rubber crumb. The hopper will preferably be insulated and/or heated. If heated, the heating can be at any temperature between 25 and 200°C. The closer the heating temperature is to the temperature of the mixing step (i), the more energy efficient the process. Where the holding step is of short duration, then active heating may be dispensed with. If there is no or insufficient active heating and the holding step is of longer duration, then the crumb may need to be mixed for longer at an elevated temperature.

Optionally, therefore, the method comprises holding the rubber crumb in a second hopper prior to the mixing step (ii) and applying heat to the rubber crumb. Optionally, the method comprises holding the rubber crumb in a second hopper prior to the mixing step (ii) and maintaining the temperature of the rubber crumb at substantially the same temperature as the heating step (i). Optionally, the second hopper is an insulated hopper capable of retaining most, or substantially all, of the heat comprised in the rubber crumb. Optionally, the rubber crumb is stored for a period of time following the heating step (i), optionally at about room temperature (about 25°C), and prior to the mixing step (ii).

Optionally, the rubber crumb undergoes a pre-mixing step prior to the pre-heating step and/or the heating step (i). Optionally, the pre-mixing step is carried out in a mixer hopper.

Optionally, the method further comprises the step of processing the rubber reclaim to a rubber reclaim product. Optionally, this can be done by passing the rubber reclaim through a mill, optionally a two roll mill. In this way, one can form a sheet of rubber. Optionally, the rubber reclaim can be passed through a two roll mill between 1 and 10 times, optionally between 1 and 5 times, further optionally between 1 and 3 times, and still further optionally 2 times. Optionally, the mill nip gap is between 0.5 and 10 mm, further optionally 1 and 5 mm, and still further optionally between 1 and 2 mm. Optionally, or additionally, the method comprises the step of processing the rubber reclaim to a rubber reclaim product by extruding the rubber reclaim, for example through a twin screw extruder. This can be advantageously used to form a rope of rubber.

Optionally, the rubber crumb is between 18 to 60 mesh in size. Optionally, the rubber crumb is between 20 to 50 mesh in size. Optionally, the rubber crumb is between 20 to 35 mesh in size. Optionally, the rubber crumb is about 24 mesh in size, optionally about 30 mesh in size. Optionally, the crumb contains less than 10% fibre, optionally less than 5% fibre.

Optionally, the rubber crumb is obtained from recycled rubber material, such as rubber tyres. Such tyres are typically pre-processed by washing, shredding, and removal of wires, e.g. by magnetic separation. Optionally, the tyres are shredded to obtain a rubber chip size of no larger than 15 mm to 20 mm. Optionally, the rubber chips are further processed to obtain a rubber chip size of no larger than 6 mm. This can be done by passing the rubber chips through a roll cracker, optionally a two roll cracker. Preferably, the rubber chips are further processed to obtain a rubber crumb size of between 18 to 40 mesh, optionally about 24 mesh. This may be achieved by passing the rubber chips through a roll grinder, optionally a two roll grinder. Optionally, fibre is removed from the rubber chips and/or rubber crumb. Optionally, fibre is removed from the rubber chips and/or rubber crumb using blowers.

In a further aspect, the present invention provides a rubber reclaim or a rubber reclaim product produced according to the method of the present invention. Optionally, the tensile strength of the rubber reclaim product is at least 6.5 N/mm²; optionally, the elasticity is at least 160%; and optionally, the Mooney Viscosity is between 70 ML(1+4) at 100 °C to 100 ML(1+4) at 100 °C, optionally 75 ML(1+4) at 100 °C to 90 ML(1+4) at 100 °C. Optionally, or additionally, the Shore A Hardness is between 60 & 66 Shore A.

In a still further aspect, there is provided a system for producing rubber reclaim, comprising:
(i) a heating conveyor system configured to receive a rubber crumb and subject said crumb to a temperature of about 150 to 200°C as the crumb is conveyed from a start point to an end point of the conveyor system; and
(ii) a heated mixer having an inlet configured to receive rubber crumb either directly from the conveyor system or from an optional hopper positioned to accumulate rubber crumb from the conveyor system and operable to deliver the rubber crumb continuously, or in batches, to the inlet, the mixer being configured to mix the received rubber crumb at a temperature of about 150 to 200°C to produce the rubber reclaim.

Optionally, the heating conveyor system is configured to receive a rubber crumb and subject said crumb to a temperature of about 165 to 185°C, optionally about 170 to 175°C, as the crumb is conveyed from a start point to an end point of the conveyor system. Optionally, the crumb is conveyed from a start point to an end point of the conveyor system over a period of at least 3 minutes, optionally over a period of 3 to 4 minutes.

Optionally, the mixer is configured to mix the received rubber crumb at a temperature of about 165 to 185°C, optionally 170 to 175°C to produce the rubber reclaim. Optionally, the mixer is configured to mix the received rubber crumb for at least 3 minutes, optionally for at least 3.5 to 4 minutes.

Optionally, the system further comprises said optional hopper.

Optionally, the system further comprises a pre-heating storage apparatus, optionally a pre-heating first hopper, for receiving a rubber crumb and pre-heating the rubber crumb to a temperature of about 25 to 160°C, optionally about 75°C, said apparatus having an outlet positioned to feed said pre-heated crumb to the start point of said conveyor system.

Optionally, the system further comprises a mill or an extruder for receiving the rubber reclaim from the mixer and respectively milling or extruding the reclaim to a rubber reclaim product.

### Brief Description of the Drawings

Embodiments of the present invention will now be described, by way of example, with reference to the accompanying drawings, in which:
FIG 1 is a perspective view of an embodiment of the system of the invention for producing rubber reclaim; and
FIG 2 is a schematic diagram depicting an embodiment of the method of the invention.

### Description of Preferred Embodiments

The present invention provides a method for producing rubber reclaim which offers a number of advantages over conventional methods and the rubber reclaim can be used to produce a rubber reclaim product having improved physical properties relative to products produced by said conventional methods. The present invention provides a method which is simple, easily controlled, energy-efficient, and does not require the use of toxic reclaiming agents. The method comprises the steps of (i) heating a rubber crumb to about 150 to 200°C; and (ii) mixing the rubber crumb at about 150 to 200°C. By processing the rubber crumb according to heating step (i), the crumb attains the softness required for further processing. However, if the temperature is increased over 200°C, degradation of the polymer in the crumb occurs, that is, there is a breakdown of the long molecular chains in the crumb to much shorter chains. Furthermore, the temperature is less than 150°C, the distribution of heat is not sufficient and/or equal throughout the crumb particles because rubber crumb, by its very nature, is a poor conductor of heat. In further processing the rubber crumb according to mixing step (ii), oxidative degradation of the rubber crumb is avoided. As a result, the rubber reclaim produced is appropriately soft and easily processed to various forms, for example, a band, a sheet, or a rope, etc. However, if mixed at below 150°C, not enough molecular chains are broken down to achieve the required Mooney Viscosity, i.e. between 70-100, and instead the Mooney Viscosity remains above 100. Above 200°C, however, degradation of the polymer in the crumb begins to occur thus causing the tensile strength and elasticity of the rubber reclaim to decrease.

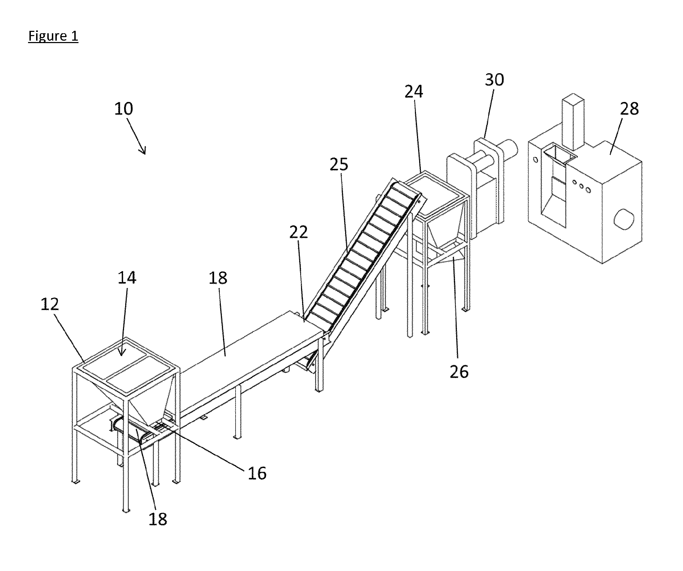

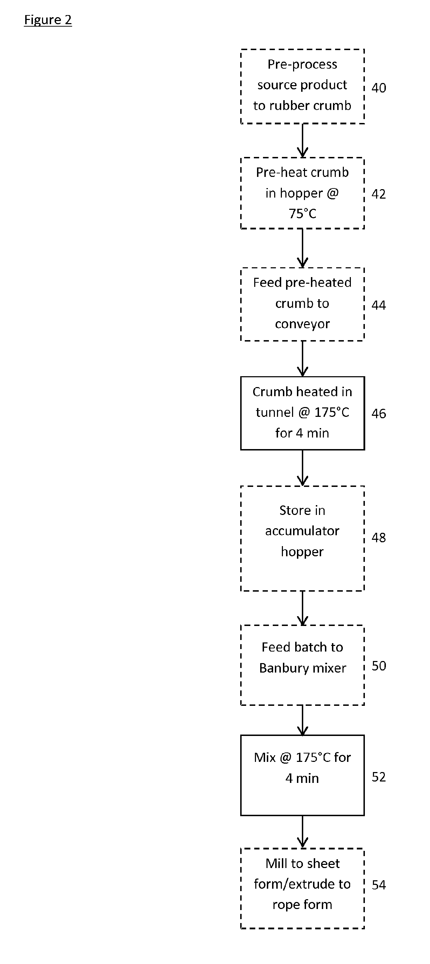

Figure 1 shows a system, indicated generally at 10, for producing rubber reclaim, the system comprising a main feed hopper 12 having an inlet 14 and an outlet 16; a heated conveyor tunnel 18 for conveying rubber crumb between a start point 20 located under the outlet 16 and an end point 22; an accumulator hopper 24 for receiving heated rubber crumb from a further conveyor 25, e.g. an elevator conveyor, or directly from the end point 22, and having an outlet feed 26; a Banbury batch mixer 28 for receiving batches of rubber directly or indirectly from the accumulator hopper outlet feed 26; and a two roll mill 30 for milling reclaim rubber from the Banbury batch mixer. The operation of this system will now be described with reference to the flowchart of Figure 2.

Figure 2 is a flowchart of operation of the system of Figure 1. Steps which are optional are denoted by boxes having broken outlines, while mandatory steps are denoted by boxes with solid outlines, it being understood that the particular preferred parameters within the latter steps are variable within the ranges taught and claimed herein.

The rubber crumb used in the method of the invention is typically between 18 to 60 mesh in size, for example, about 24 mesh in size. The finer the crumb size used, the better the quality of the reclaim product which is formed, in terms of tensile strength and elongation properties, for example. Furthermore, rubber particles of smaller crumb size heat up more quickly since cured rubber is a bad conductor of heat and therefore it takes time for the heat to penetrate the rubber particles. Therefore, the time for which the rubber crumb is heated in heating step (i) and/or mixing step (ii) may be adjusted according to the size of crumb used. The optimal crumb size to use may be determined, at least in part, by economic considerations which take account of the amount of energy required to produce the rubber reclaim and the type of end product to be produced from said reclaim. When referring to mesh size, the skilled person understands that a mesh size of 18, i.e. 18 mesh, mean that at least 95% of the crumb particles have a diameter of 1.00 mm or less. Similarly, for 20 mesh, at least 95% of the crumb particles have a diameter of 0.84 mm or less; for 25 mesh, at least 95% of the crumb particles have a diameter of 0.71 mm or less; for 30 mesh, at least 95% of the crumb particles have a diameter of 0.59 mm or less; for 35 mesh, at least 95% of the crumb particles have a diameter of 0.50 mm or less; 40 mesh, at least 95% of the crumb particles have a diameter of 0.42 mm or less; for 45 mesh, at least 95% of the crumb particles have a diameter of 0.35 mm or less; for 50 mesh, at least 95% of the crumb particles have a diameter of 0.30 mm or less; and for 60 mesh, at least 95% of the crumb particles have a diameter of 0.250 mm or less. Furthermore, the crumb particles are understood to be substantially spherical in shape.

Fibre contained in the rubber crumb adversely impacts the quality of the rubber reclaim produced. Therefore, rubber crumb used in the method of the invention typically contains less than 10% fibre, preferably less than 5% fibre. Particularly, when the rubber crumb is obtained from recycled rubber material such as waste rubber tyres, the pre-processing of such rubber material is required to remove non-rubber components, for example, fibres and/or metal wires, etc. In process step 30 (Figure 2), the pre-processing of a rubber material, such a waste tyres, to produce rubber crumb suitable for the method of the invention may comprise one or more of the steps of: washing the tyres; shredding the tyres to obtain a rubber chip size of, for example, no larger than 15 mm to 20 mm; removal of any wires or metal components in the tyres during or after the shredding step, for example, by magnetic separation; passing the rubber chips through a roll cracker, such as a two roll cracker, to obtain a rubber chip size of, for example, no larger than 6 mm; passing the rubber chips through a roll grinder, such as a two roll grinder, to obtain a rubber crumb size of, for example, between 18 to 60 mesh, optionally about 24 mesh; and removing fibre from the processed rubber using a blower(s).

In process step 32, the method comprises a pre-heating step before the heating step (i). This pre-heating step may comprise heating the rubber crumb to about 75°C. The rubber crumb may be heated to about 75°C, and maintained at this temperature, prior to the heating step (i). This has an added benefit of improving the efficiency with which the rubber crumbed is heated to 150 to 200°C in the subsequent heating step (i). The rubber crumb may be held in a first hopper 12, for example a main feed hopper (Figure 1), and thus may conveniently be fed through an outlet 16 into an apparatus 18, for example a heated tunnel conveyor, for the heating step (i). The first hopper 12 may be insulated and/or may comprise means to heat the crumb. Such insulation means and heating means (not shown) are well known to the skilled person.

In process step 34, the method comprises feeding the pre-heated rubber crumb to a heating apparatus 18, for example, a heated tunnel conveyor. In process step 36, the heating step (i) may comprise heating the rubber crumb to about 170 to 175°C for about 3.5 to 4 minutes. Advantageously, the heating step (i) may comprise heating the rubber crumb to about 175°C for about 4 minutes (Figure 2). Thus, the heating step (i) may be carried out by feeding the rubber crumb through an outlet 16 of the first hopper into a heated conveyor tunnel 18 wherein the rubber crumb is heated to the required temperature. The natural rubber in, for example, rubber crumb derived from waste tyres, starts degradation at 160 to 165°C, and expansion of the rubber particles occurs which causes softening of the rubber crumb. Therefore, the rubber crumb may be heated at 170 to 175°C for 3.5 to 4 minutes to achieve optimal results in terms of the physical properties of the rubber reclaim. Temperatures above 200°C cause severe degradation to the rubber content. Furthermore, heating the crumb for longer than 4 minutes at, for example,170 to 175°C, results in no additional benefit. It should be noted that crumb derived from synthetic rubber needs to be heated to an increased temperature relative to natural rubber because synthetic rubber begins to expand and soften only at 185°C. Therefore, the preferred temperature ranges recited herein may be increased by 15 to 20°C for rubber crumb derived from synthetic rubber.

A pre-mixing step (not shown) may also be employed to prior to the pre-heating and/or heating step (i). The mixing step may be carried out in the first hopper 12, or in a separate mixing drum or mixing hopper. This pre-mixing step may be employed to ensure that each batch of crumb is homogeneously distributed since crumb obtained from different sources, for example, car tyres, truck tyres, tractor tyres, and large plant machinery tyres, and from different manufacturers of these products, will have differences in blends of rubber. It is therefore advantageous to ensure that all the different blends of rubber polymers are distributed as evenly throughout the mix. This helps provide for a good, consistent result throughout the batch of crumb when converting it to reclaim products such as rubber sheet, ropes, etc.

In process step 38, the method further comprises a step of holding the rubber crumb in a second hopper 24 prior to the mixing step (ii). The rubber crumb may be held in the second hopper 24 prior to the mixing step (ii) such that most, or substantially all, of the heat comprised in the rubber crumb is retained. This has a benefit of improving the efficiency with which the rubber crumbed is heated to 150 to 200°C in the subsequent mixing step (ii). The rubber crumb may be held in the second hopper 24 at a temperature greater than about room temperature (i.e. greater than about 25°C), such as at a temperature of between 25 to 200°C, and then fed into an internal mixer 28 for the mixing step (ii). The temperature of the rubber crumb may be kept at substantially the same temperature following the heating step (i) before feeding the crumb into the internal mixer 28 for the mixing step (ii). The second hopper 24 may comprise means to insulate the hopper 24 so as to retain the heat within the heated crumb, and/or the hopper 24 may comprise means to heat the crumb. Such insulation means and heating means (not shown) are well known to the skilled person. The rubber crumb may be held in the second hopper 24 for any period of time, at the discretion of the operator, but without resulting in degradation of the rubber crumb. For example, the crumb may be held in the second hopper for 15 seconds to 1 hour, 1 to 72 hours, or longer. The crumb may be held in the second hopper 24 until a batch-sized quantity of crumb has been received from the apparatus 18, or alternatively from the further conveyor 25, and which is then fed into the internal mixer 28 via outlet feed 26. Additionally, or alternatively, the rubber crumb may be stored in the hopper 24 for a period of time prior to heating step (ii). Thus, the second hopper may act as a storage apparatus. Again, the rubber crumb may be stored in the second hopper for any period of time, at the discretion of the operator, but without resulting in degradation of the rubber crumb. For example, the crumb may be stored in the second hopper for 1 to 72 hours, or longer.

In process step 40, the method comprises feeding the heated rubber crumb into the internal mixer 30, for example, a Banbury™ mixer. In process step 42, mixing step (ii) may comprise mixing the rubber crumb to about 165 to 170°C for about 3.5 to 4 minutes. Advantageously, the mixing step comprises heating the rubber crumb to about 170°C for about 4 minutes (Figure 2). Optionally, the mixing step (ii) is carried out in an internal mixer 28, such as an internal batch mixer. A suitable internal mixer is a Banbury™ mixer. Other suitable mixers includes Intermix™, Kneader™ and Cold Feed Extruder (long screw type). Such mixers may comprise two rotors, or two or four wings. Further, the mixers may comprise two rotating spiral-shaped blades (rotors) encased in segments of cylindrical housings, which intersect so as to leave a ridge between the blades. The blades may be cored for circulation of heating or cooling agents. During the mixing step (ii), the heated rubber crumb is sheared between the rotors of the mixer 28 and also between the wall casing and rotors. This shearing action results in the long chain rubber molecules being reduced to shorter chain molecules. The heating of the rubber crumb in the mixer 28 helps to further soften the crumb. It is during this thermo-mechanical process that the crumb begins to form the reclaim.

In process step 44, the method further comprises the step of processing the rubber reclaim to a rubber reclaim product. Such a step may comprise passing the rubber reclaim through a mill 30, for example, a two roll mill, to form a sheet of rubber. The rubber reclaim may be passed through the mill, for example, a two roll mill, until the sheet is formed. Generally, the reclaim crumb will begin to form a sheet within 3 passes. For this process, the mill nip gap (i.e. the distance between the rolls) may be set at between 1 to 2mm, for example. During the milling process, shearing takes place causing further molecular chain breakdown. The rollers may be cooled so that the temperature is not allowed to exceed 75°C. Alternatively, or additionally, the step of processing the rubber reclaim to a rubber reclaim product may be carried out by extruding the rubber reclaim, for example, by extruding the rubber reclaim through a twin screw extruder, and/or by using an extruder die head, to form a rope of rubber.

In a further aspect, the present invention provides a rubber reclaim or a rubber reclaim product produced according to the method of the present invention. The tensile strength of the rubber reclaim product is at least 6.5 N/mm², the elasticity is at least 160%, and the Mooney Viscosity is between 70 ML(1+4) at 100 °C to 100 ML(1+4) at 100 °C, optionally 75 ML(1+4) at 100 °C to 90 ML(1+4) at 100 °C. Mooney viscosity and Mooney Units are well known in the art and are defined by the International Organization for Standardization in Standard ISO 289, Part 1. Optionally, or additionally, the Shore A Hardness is between 60 & 66 Shore A. ISO/PDTS 16095/ASTM D 5644 was used to verify the physical characteristics rubber reclaim product, including such as tensile strength, elongation at break, elasticity, and Shore A hardness.

The inventors have found that reclaim products made according to the presently disclosed method but in which parameters are below the minimum values stipulated above, were found to have the following properties: tensile strength = 7 to 8.5 N/mm², elasticity = 180 to 220%, and Mooney Viscosity of 100 to 150. On the other hand, reclaim made according to the presently disclosed method but in which parameters are above the maximum values stipulated above, were found to have the following properties: tensile strength = 3 to 4.5 N/mm², elasticity 90 to 120%, and Mooney Viscosity = 25 to 40. The Mooney Viscosity of the rubber reclaim is important in terms of energy consumption in final mixing of finished compound. Rubber reclaim which has a Mooney Viscosity above 90 is problematic, especially in terms of final compound mixing as such rubber reclaim requires more energy to create more shearing during final mixing in order to produce a homogenous good quality mix. Mooney Viscosity needs to be carefully controlled as this also has a direct effect on the Green Strength of the material. By Green Strength it is meant the physical pliability & strength of the final preform which may be loaded into the compression mould for moulding into finished product. Thus, a rubber reclaim or rubber reclaim product produced according the presently disclosed method exhibits optimal properties in terms of tensile strength, elasticity and Mooney Viscosity.

In the present disclosure, the term "about" is meant to indicate that the value of the parameter to which the term pertains is the recited value, or that said value can vary within a certain range depending on the margin of error of the method or apparatus used to evaluate the parameter. For example, the margin of error may range between ±0.5°C to ±5°C in respect of temperature values, and ±5 seconds to ±30 seconds in respect of time values.

The invention is not limited to the embodiment described herein but can be amended or modified without departing from the scope of the present invention as defined by the appended claims.

## Claims

1. A method for producing rubber reclaim, said method comprising:
(i) heating a rubber crumb to about 150 to 200°C; and
(ii) mixing the rubber crumb at about 150 to 200°C to produce the rubber reclaim.

2. The method of claim 1, wherein the heating step (i) comprises heating the rubber crumb at a sufficiently high temperature and for a sufficiently long time to achieve a core particle temperature for particles of the rubber crumb of at least 160°C, and preferably at least 170°C.

3. The method of claim 1 or 2, wherein the heating step (i) comprises heating the rubber crumb particles to a maximum temperature below that at which oxidative degradation of the rubber polymer occurs.

4. The method of any of claims 1-3, wherein the heating step (i) comprises heating the rubber crumb to about 165 to 185°C, optionally to about 170 to 175°C.

5. The method of any one of the preceding claims, wherein the heating step (i) comprises heating the rubber crumb for at least 3 minutes, optionally for about 3.5 to 4.5 minutes.

6. The method of any one of the preceding claims, wherein the mixing step (ii) continues at a temperature and time sufficient to produce a reclaim rubber having a Mooney Viscosity of between 70-90 Mooney Units, without allowing the rubber to exceed the temperature at which oxidative degradation of the polymer occurs.

7. The method of any one of the preceding claims, wherein the mixing step (ii) comprises heating the rubber crumb to about 160 to 180°C, optionally about 165 to 170°C.

8. The method of any one of the preceding claims, wherein the mixing step (ii) comprises heating the rubber crumb for at least 3 minutes, optionally for about 3.5 to 4.5 minutes.

9. The method of any one of the preceding claims, wherein the mixing step (ii) comprises mixing the rubber crumb in an internal mixer, optionally an internal batch mixer.

10. The method of any one of the preceding claims, wherein method comprises holding the rubber crumb in the second hopper prior to the mixing step (ii) and in which most, or substantially all, of the heat comprised in the rubber crumb is retained.

11. The method of any one of the preceding claims, wherein the method comprises a pre-heating step before the heating step (i) and/or wherein the rubber crumb undergoes a pre-mixing step prior to said pre-heating step and/or the heating step (i).

12. The method of any one of the preceding claims, wherein the method further comprises the step of processing the rubber reclaim to a rubber reclaim product, optionally by passing the rubber reclaim through a mill or by extruding the rubber reclaim.

13. The method of any one of the preceding claims, wherein the rubber crumb is between 18 to 60 mesh in size, optionally between 20 to 50 mesh in size.

14. A rubber reclaim product produced according to the method of the present invention, wherein the tensile strength of the rubber reclaim product is at least 6.5 N/mm², the elasticity is at least 160%, and the Mooney Viscosity is between 70 ML(1+4) at 100°C to 100 ML(1+4) at 100°C, optionally between 75 ML(1+4) at 100°C to 90 ML(1+4) at 100°C.

15. A system for producing rubber reclaim, comprising:
(i) a heating conveyor system configured to receive a rubber crumb and subject said crumb to a temperature of about 150 to 200°C as the crumb is conveyed from a start point to an end point of the conveyor system; and
(ii) a heated mixer having an inlet configured to receive rubber crumb either directly from the conveyor system or from an optional hopper positioned to accumulate rubber crumb from the conveyor system and operable to deliver the rubber crumb continuously, or in batches, to the inlet, the mixer being configured to mix the received rubber crumb at a temperature of about 150 to 200°C to produce the rubber reclaim.
